# EUROPEAN PATENT SPECIFICATION

(11) **EP 3 339 614 B1**
(45) Date of publication and mention of the grant of the patent: **05.02.2020**
(21) Application number: 17208711.6
(22) Date of filing: 20.12.2017
(51) Int. Cl.: F02D 41/02, F02D 41/00

(54) **VEHICLE AND METHOD OF CONTROLLING ENGINE**
FAHRZEUG UND VERFAHREN ZUR STEUERUNG DES MOTORS
VÉHICULE ET PROCÉDÉ DE COMMANDE DE MOTEUR

(30) Priority: 26.12.2016 JP 2016251482
(43) Date of publication of application: 27.06.2018
(73) Proprietor: Yamaha Hatsudoki Kabushiki Kaisha, Iwata-shi, Shizuoka 438-8501 (JP)
(72) Inventor: TABATA, Kensuke, Iwata-shi, Shizuoka 438-8501 (JP)
(74) Representative: Grünecker Patent- und Rechtsanwälte PartG mbB

(56) References cited:
- DE-A1- 4 445 779
- DE-A1- 10 258 452
- DE-A1- 10 348 774
- DE-U1-202013 010 403
- US-A1- 2005 193 997
- US-B2- 7 063 059

## Description

The present invention relates to a technique for controlling an engine mounted on a vehicle such as a saddled vehicle or the like.

US 7 063 059 B2 discloses a multi-cylinder four-stroke internal combustion engine enabling a method for on-the-fly switching between two or more firing orders. Switching to the new firing order is done without requiring any tear-down of the engine such as to swap camshafts. Switching can be triggered by the rider, or it can be triggered automatically per conditions such as selected gear, RPM range, track location, velocity, and the like.

DE 20 2013 010403 U1 discloses that an engine comprises four cylinders, each of the cylinders has a movable piston for drive a crankshaft of the vehicle. Additionally, DE 20 2013 010403 U1 discloses also that a controller unit includes a detection unit for determining a warming-up state of the internal-combustion engine, and that the detection unit communicates with a temperature sensor for gathering the temperature of the catalyst.

DE 103 48 774 A1 discloses a method that involves controlling cylinders to permit operation of an air pump to inject air in an exhaust gas conduit, during heating phase. The cylinders are operated for allowing the operation of the air pump by stopping fuel injection. The air pump operation is controlled by activating inlet valves and exhaust valves. The cylinders pumping power are optimized by utilizing an entirely variable valve control.

DE 102 58 452 A1 relates to a catalytic converter early light off using cylinder deactivation. Moreover, DE 102 58 452 A1 discloses a vehicle which comprises an engine with a plurality of cylinders. Additionally, DE 102 58 452 A1 describes that a controller deactivates one or more of the cylinders of the engine during idle or low lead conditions as soon as possible after the engine starts up. In addition, DE 102 58 452 A1 discloses also that a cylinder deactivation involves turning off one or more of the cylinders of the engine during idle and light load operating conditions. Full engine operation is automatically restored when necessary for acceleration or for hauling heavy loads.

A vehicle (motorcycle) disclosed in JP 2014-211156 drives wheels by using an engine which causes a plurality of cylinders to sequentially perform a combustion stroke at uneven intervals. Even if traction of the wheels is reduced when the combustion strokes are performed at a shortest interval, for example, such an engine has an advantage of recovering the traction of the wheels during a period where the combustion strokes are performed at a maximum interval.

The vehicle using such an engine as a driving source is required to suppress exhaust of unburned gas left, being unburned in the combustion stroke. Then, in order to suppress the exhaust of unburned gas, generally, a catalyst is used to purify the unburned gas.

In the vehicle equipped with the engine which performs the combustion stroke at uneven intervals, however, due to the following factor, there is a possibility of emitting a large amount of unburned gas. Specifically, in two combustion strokes performed at the shortest interval, due to an effect of acceleration of a crankshaft caused by a cylinder which performed the first combustion stroke, a combustion period of a cylinder which performs the second combustion stroke cannot be ensured sufficiently and it is therefore hard to suppress generation of unburned gas. On the other hand, since a temperature of the catalyst is low during execution of a warm-up operation, there is a possibility that the catalyst cannot sufficiently exert the function of purifying unburned gas and a large amount of unburned gas, being not purified, is emitted from the vehicle.

The present invention is intended to solve the above problem, and it is an object of the present invention to provide a technique to make it possible to suppress the amount of unburned gas to be emitted during execution of a warm-up operation, from a vehicle equipped with an engine which performs a combustion stroke at uneven intervals. According to the present invention said object is solved by a vehicle having the features of the independent claim 1. Moreover, said object is also solved by a method of controlling an engine having the features of the independent claim 11. Preferred embodiments are laid down in the dependent claims.

According to an aspect of the present invention there is provided a vehicle as defined in claim 1. According to another aspect of the present invention there is provided a method of controlling an engine as defined in claim 12.

In the present invention (vehicle, method of controlling an engine) having such a configuration, performed are the normal mode which causes the plurality of cylinders to sequentially perform the combustion stroke so that the combustion stroke occurs at the first interval, at the second interval, and at the third interval, and a pause mode which causes one of the plurality of cylinders to pause the combustion stroke while causing the other cylinders to perform the combustion stroke (the first interval > the second interval > the third interval). Particularly, in the normal mode, the one cylinder performs an explosion at a boundary between the second interval and the third interval that are successive (herein, the order in which the second interval and the third interval successively occur may be an order of the second interval and then the third interval, or another order of the third interval and then the second interval). On the other hand, in the pause mode, since the combustion stroke of the one cylinder is paused, the third interval that is the shortest does not occur. As a result, in the pause mode, the amount of unburned gas to be generated is suppressed. Then, in the present invention, since the warm-up operation is performed by the pause mode, it is possible to suppress the amount of unburned gas to be emitted from the vehicle during execution of the warm-up operation.

Thus, according to the present invention, it is possible to suppress the amount of unburned gas to be emitted during execution of a warm-up operation, from a vehicle equipped with an engine which performs a combustion stroke at uneven intervals.

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.
Fig. 1 is a left-side elevational view showing an exemplary motorcycle which corresponds to a vehicle of the present invention.
Fig. 2 is a view schematically showing an internal structure of the engine that the motorcycle of Fig. 1 is equipped with.
Fig. 3 is a view showing an electrical structure provided in the motorcycle shown in Fig. 1.
Figs. 4 and 5 are views schematically showing four strokes performed by each cylinder of the engine.
Fig. 6 is a timing chart showing respective operations of the engine in the normal mode and the pause mode.
Fig. 7 is a flowchart showing a first exemplary control of the engine.
Fig. 8 is a flowchart showing a second exemplary control of the engine.

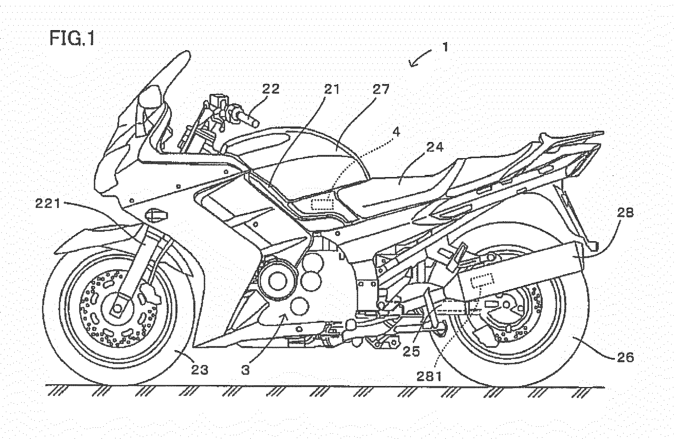

Fig. 1 is a left-side elevational view showing an exemplary motorcycle which corresponds to a vehicle of the present invention. The motorcycle 1 is provided with a main frame 21 extending from the front side to the rear side. To a front end portion of the main frame 21, a steering handle 22 is attached swingably from side to side, and to a front fork 221 which is a lower end portion of the steering handle 22, a front wheel 23 is attached rotatably. Further, to a substantially center portion of the main frame 21, a seat 24 is attached. Thus, the motorcycle 1 is a saddled vehicle in which a driver can operate the steering handle 22 while sitting on the seat 24.

To a rear end portion of the main frame 21, a rear arm 25 is attached swingably up and down, and to a rear end portion of the rear arm 25, a rear wheel 26 is attached rotatably. Further, a fuel tank 27 disposed between the steering handle 22 and the seat 24 and an engine 3 disposed below the fuel tank 27 are each attached to the main frame 21. The engine 3 includes a plurality of (four) cylinders arranged in line, and drives the rear wheel 26 under fuel supply from the fuel tank 27. Between the fuel tank 27 and the engine 3, an ECU (Electronic Control Unit) 4 is attached to the main frame 21 and an operation of the engine 3 is controlled by the ECU 4.

In the rear of the engine 3, a muffler 28 communicated with the engine 3 is attached to the main frame 21, and exhaust gas from the engine 3 is emitted outside through the muffler 28. The muffler 28 contains therein a catalyst 281, and purifies the exhaust gas with the catalyst 281 and then emits the exhaust gas.

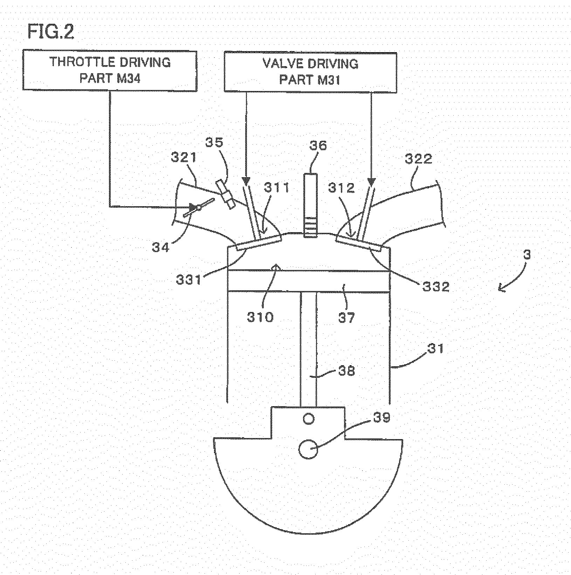

Fig. 2 is a view schematically showing an internal structure of the engine that the motorcycle of Fig. 1 is equipped with. The engine 3 has four cylinders 31 arranged in line as described above and is a four-stroke type engine which causes each of the cylinders 31 to perform an intake stroke, a compression stroke, a combustion stroke, and an exhaust stroke. Further, since the four cylinders 31 have the same constitution, description will be made herein, showing one cylinder 31.

In an upper surface of the cylinder 31, an intake port 311 and an exhaust port 312 are each opened. The engine 3 has an intake pipe 321 and an exhaust pipe 322 for each cylinder 31, and the intake pipe 321 is connected to the intake port 311 of the cylinder 31 and the exhaust pipe 322 is connected to the exhaust port 312 of the cylinder 31. Further, the engine 3 has an intake valve 331 and an exhaust valve 332 for each cylinder 31, and the intake valve 331 opens/closes the intake port 311 of the cylinder 31 and the exhaust valve 332 opens/closes the exhaust port 312 of the cylinder 31. Therefore, when the intake valve 331 opens the intake port 311, the intake pipe 321 gets communicated with a combustion chamber 310 inside the cylinder 31, and when the intake valve 331 closes the intake port 311, the intake pipe 321 gets isolated from the combustion chamber 310. When the exhaust valve 332 opens the exhaust port 312, the exhaust pipe 322 gets communicated with the combustion chamber 310, and when the exhaust valve 332 closes the exhaust port 312, the exhaust pipe 322 gets isolated from the combustion chamber 310. The exhaust pipe 322 of each cylinder 31 is extended rearward and communicated with the muffler 28 (Fig. 1).

Further, the engine 3 has a valve driving part M31 for each cylinder 31. The valve driving part M31 causes the intake valve 331 and the exhaust valve 332 to move to and fro with respect to the cylinder 31, to thereby open and close the intake port 311 and the exhaust port 312. With this operation of the valve driving part M31, in the intake stroke, the intake valve 331 opens the intake port 311 and the exhaust valve 332 closes the exhaust port 312. In the compression stroke and the combustion stroke, the intake valve 331 and the exhaust valve 332 closes the intake port 311 and the exhaust port 312, respectively. In the exhaust stroke, the intake valve 331 closes the intake port 311 and the exhaust valve 332 opens the exhaust port 312. At that time, the valve driving part M31 performs valve overlap. Therefore, the intake valve 331 starts opening before the end of the exhaust stroke, and a period in which the intake valve 331 opens the intake port 311 and another period in which the exhaust valve 332 opens the exhaust port 312 partially overlap.

The engine 3 has a throttle valve 34 and a throttle driving part M34 for each intake pipe 321. The throttle valve 34 is disposed inside the intake pipe 321, and the throttle driving part M34 changes a degree of opening of the throttle valve 34, to thereby adjust a flow rate of air to be supplied into the combustion chamber 310 of the cylinder 31. Further, the engine 3 has an injector 35 for each intake pipe 321. This injector 35 injects fuel supplied from the fuel tank 27 into the intake pipe 321. Thus, mixed gas of the air passing through the throttle valve 34 and the fuel injected from the injector 35 is supplied into the combustion chamber 310 of the cylinder 31. The engine 3 has a spark plug 36 for each cylinder 31, and the spark plug 36 fires the mixed gas supplied to the combustion chamber 310, to thereby explode the mixed gas in the combustion chamber 310.

The engine 3 has a piston 37 and a connecting rod 38 for each cylinder 31. The piston 37 is disposed inside the cylinder 31 and forms the combustion chamber 310 between the piston 37 and an inner wall of the cylinder 31. One end of the connecting rod 38 is connected to the piston 37. Further, the engine 3 has a crankshaft 39, and the other end of each connecting rod 38 is connected to the crankshaft 39. Thus, each piston 37 and the crankshaft 39 are connected to each other with the connecting rod 38, and a horizontal movement of each piston 37 is converted into a rotational motion of the crankshaft 39. This crankshaft 39 is a two-plane type (cross plane type) crankshaft disclosed in, for example, JP 2014-109248. For this reason, the combustion stroke in each cylinder 31 is performed at uneven intervals as described later.

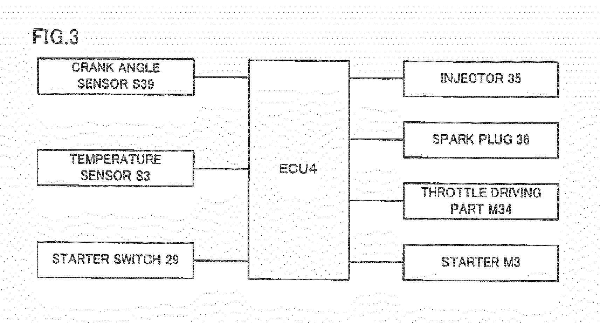

Fig. 3 is a view showing an electrical structure provided in the motorcycle shown in Fig. 1. The ECU 4 provided in the motorcycle 1 is, for example, a computer constituted of a CPU (Central Processing Unit), a RAM (Random Access Memory), and the like, and servers to generally control the constituent elements of the motorcycle 1.

Specifically, the motorcycle 1 is provided with a crank angle sensor S39 which detects a rotation angle θ of the crankshaft 39, and the ECU 4 controls timings of a fuel injection from the injector 35 and an explosion by the spark plug 36 on the basis of the rotation angle 0 detected by the crank angle sensor S39. Further, the ECU 4 controls the throttle driving part M34 to adjust the degree of opening of the throttle valve 34. Particularly, the ECU 4 controls the degree of opening of the throttle valve 34 on the basis of a rotation speed of the engine 3 obtained from the crank angle sensor S39 during idling, to thereby keep the rotation speed of the engine 3 not lower than a predetermined speed.

Further, the motorcycle 1 is provided with a starter switch 29 disposed, for example, in the vicinity of a grip of the steering handle 22 and a starter M3 which starts the engine 3. Then, when the ECU 4 confirms that the driver operates the starter switch 29, the ECU 4 causes the starter M3 to start the engine 3.

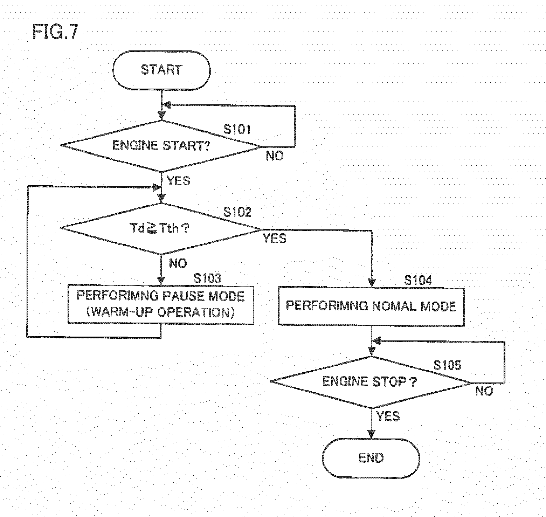

The motorcycle 1 is also provided with a temperature sensor S3 which detects a temperature of the engine 3, and the ECU 4 controls the operation of the engine 3 on the basis of the temperature detected by the temperature sensor S3. Particularly, the ECU 4 stores therein a threshold temperature Tth which corresponds to a detected temperature of the temperature sensor S3 in a case where a temperature of the catalyst 281 is not lower than an activation temperature, and the ECU 4 controls the operation of the engine 3 on the basis of comparison between the detected temperature Td of the temperature sensor S3 and the threshold temperature Tth. This control will be described later with reference to Fig. 7.

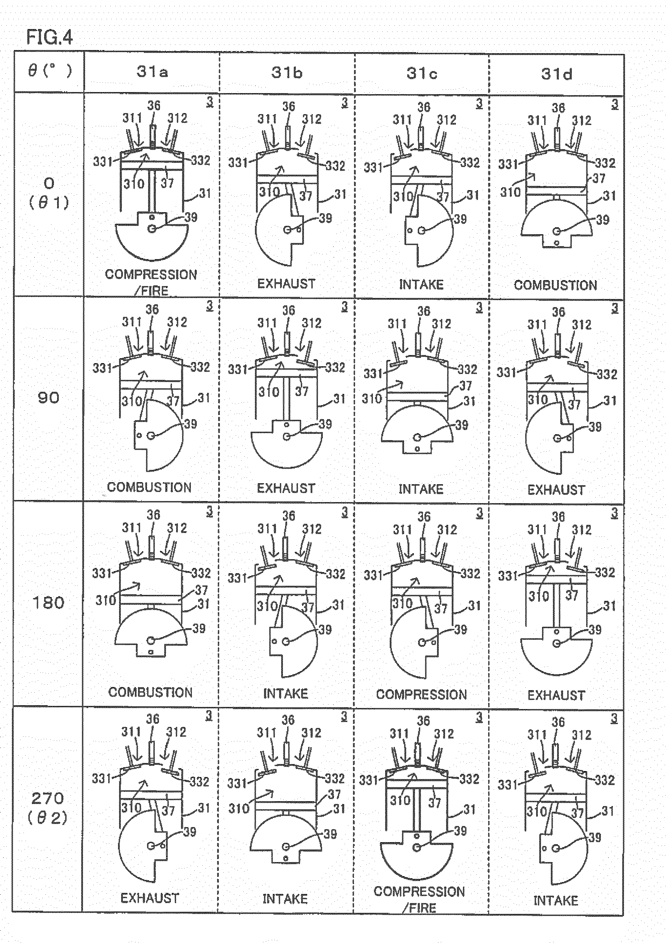

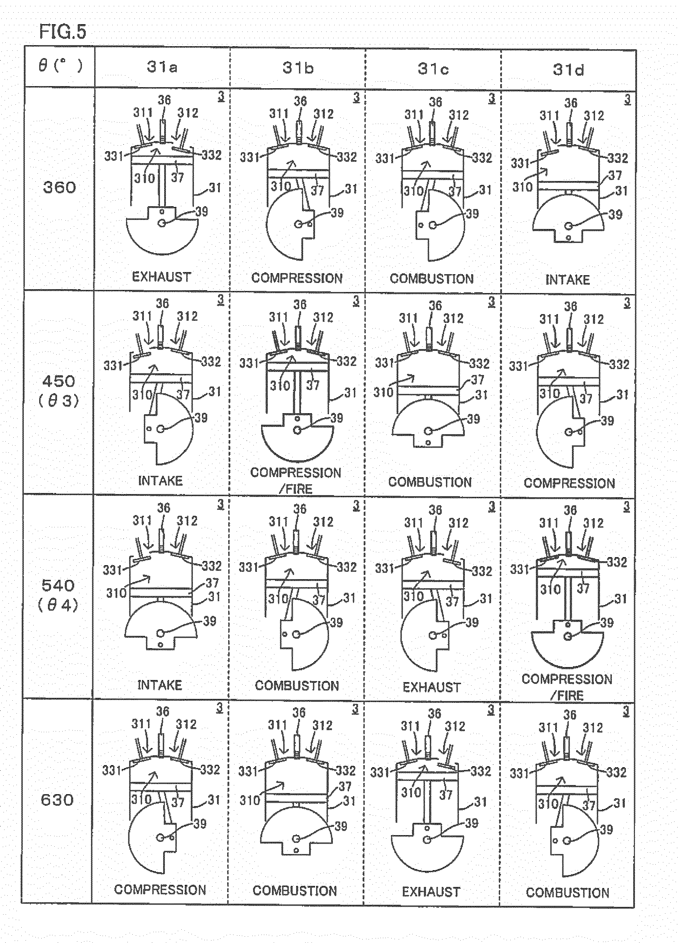

Figs. 4 and 5 are views schematically showing four strokes performed by each cylinder of the engine. In these figures, in order to make a distinction among the four cylinders 31, different reference signs 31a to 31d are used. As shown in Figs. 4 and 5, each of the cylinder 31a (first cylinder), the cylinder 31b (second cylinder), the cylinder 31c (third cylinder), and the cylinder 31d (fourth cylinder) performs four strokes while the crankshaft 39 makes two rotations (720-degree rotation). At that time, there are phase differences provided for the operations of four strokes in each of the cylinders 31a to 31d. Specifically, there is a phase difference of 270 degrees between the operation of the cylinder 31a and the operation of the cylinder 31c, there is a phase difference of 180 degrees between the operation of the cylinder 31c and the operation of the cylinder 31b, there is a phase difference of 90 degrees between the operation of the cylinder 31b and the operation of the cylinder 31d, and there is a phase difference of 180 degrees between the operation of the cylinder 31d and the operation of the cylinder 31a.

Then, the ECU 4 performs an explosion by using the spark plug 36 in the order of the cylinders 31a, 31c, 31b, and 31d, corresponding to the phase differences of the respective operations of the cylinders 31a to 31d, to thereby cause the cylinders to perform the combustion stroke. Specifically, in the cylinder 31a, the explosion is performed by using the spark plug 36 at a timing where the rotation angle θ of the crankshaft 39 becomes 0 degrees (angle θ1). In the cylinder 31c, the explosion is performed by using the spark plug 36 at a timing where the rotation angle θ of the crankshaft 39 becomes 270 degrees (angle 02). In the cylinder 31b, the explosion is performed by using the spark plug 36 at a timing where the rotation angle θ of the crankshaft 39 becomes 450 degrees (angle 03). In the cylinder 31d, the explosion is performed by using the spark plug 36 at a timing where the rotation angle θ of the crankshaft 39 becomes 540 degrees (angle 04).

Thus, in the engine 3, the combustion stroke of the cylinder 31 is performed at each of the three interval patterns, i.e., an interval P1 (270 degrees), an interval P2 (180 degrees), and an interval P3 (90 degrees). In the present embodiment, particularly, the ECU 4 selectively performs a normal mode for causing the cylinders 31 to perform the combustion stroke as shown in Figs. 4 and 5 and a pause mode for causing one of the cylinders 31 to pause the combustion stroke, as compared with the normal mode.

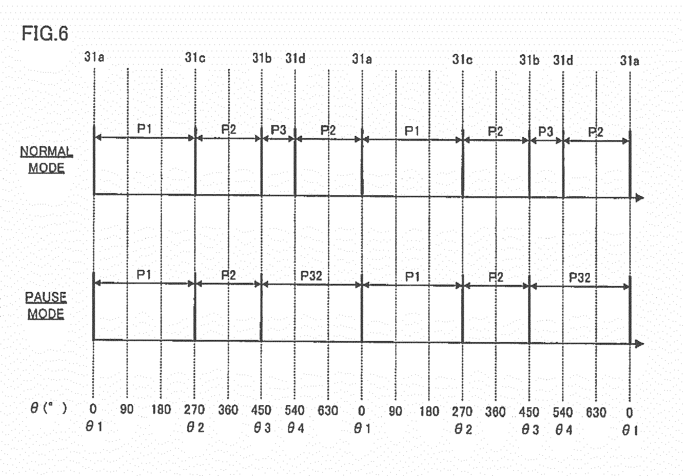

Fig. 6 is a timing chart showing respective operations of the engine in the normal mode and the pause mode. In this figure, the horizontal axis represents the rotation angle θ of the crankshaft 39. As shown in Fig. 6, in the normal mode, the four cylinders 31a to 31d perform the combustion stroke in the order of the cylinders 31a, 31c, 31b, and 31d. As a result, during one round of four strokes, the respective combustion strokes of the four cylinders 31 are sequentially performed so that the execution interval can arrange (in other word "occur") in the order of the intervals P1, P2, P3, and P2 (P1 > P2 > P3). In the normal mode, particularly, the combustion strokes of the cylinders 31 are performed so that the interval P2 and the interval P3 can occur successively.

On the other hand, in the pause mode, one cylinder 31 among the four cylinders 31a to 31d pauses the combustion stroke, as compared with the normal mode. Herein, the cylinder 31 which is a pause target satisfies the following pause target condition:
a) the cylinder 31 performs one of the two combustion strokes between which the shortest interval P3 among the intervals P1 to P3 occurs in the normal mode; and
b) the cylinder 31 performs one of the two combustion strokes between which the interval P2 occurs in the normal mode.

Specifically, the cylinder 31 which performs an explosion at a boundary between the intervals P2 and P3 that successively occur in the normal mode satisfies this pause target condition. Though the cylinders 31b and 31d satisfy this pause target condition in the exemplary normal mode shown in Fig. 6, the cylinder 31d is a pause target cylinder 31d which pauses the combustion stroke in the exemplary pause mode shown in Fig. 6.

The ECU 4 performs the pause of the combustion stroke of the pause target cylinder 31d by stopping the fuel injection from the injector 35 to the pause target cylinder 31d. Specifically, the ECU 4 does not perform, in the pause mode, the fuel injection from the injector 35 which the ECU 4 performs at a timing where the rotation angle of the crankshaft 39 becomes the angle θ4 in the normal mode. Also in the pause mode, the valve driving part M31 performs an opening and closing operation of the intake valve 331 and the exhaust valve 332 for the pause target cylinder 31d, same as in the normal mode. Therefore, in the pause mode, the pause target cylinder 31d performs the intake stroke, the compression stroke, and the exhaust stroke. Similarly, the pause target cylinder 31d performs an expansion stroke for expanding the combustion chamber 310 without combustion of the fuel, instead of the combustion stroke, between the compression stroke and the exhaust stroke. As a result, in the pause mode, the respective combustion strokes of the cylinders 31a, 31c, and 31b other than the pause target cylinder 31d are sequentially performed at the interval P1, the interval P2, and an interval P32 (= P3 + P2 = P1 > P3), and the shortest interval P3 does not occur.

Thus, the ECU 4 can cause the engine 3 to selectively perform the normal mode and the pause mode. Particularly, the ECU 4 performs a warm-up operation for heating the catalyst 281 with the exhaust gas which is emitted from the engine 3 and passes through the muffler 28, by the pause mode. Subsequently, an exemplary control of the engine 3 performed by the ECU 4 will be described.

Fig. 7 is a flowchart showing a first exemplary control of the engine. The ECU 4 controls execution of the flowchart shown in Fig. 7. In Step S101, it is determined whether or not the starter M3 starts the engine 3. Then, when it is confirmed that the engine 3 starts ("YES" in Step S101), it is determined whether the temperature Td of the engine 3, which is detected by the temperature sensor S3, is equal to or more than the threshold temperature Tth or not (Step S102).

When the detected temperature Td of the temperature sensor S3 is lower than the threshold temperature Tth ("No" in Step S102), the engine 3 performs the pause mode (Step S103). During idling in the pause mode, the ECU 4 adjusts the degree of opening of the throttle valve 34 on the basis of the crank angle sensor S39, to thereby keep the rotation speed of the engine 3 not lower than a predetermined speed. Then, until the detected temperature Td of the temperature sensor S3 becomes equal to or more than the threshold temperature Tth (until "YES" in Step S102), the loop of Steps S102 and S103 is repeated and the engine 3 continues the pause mode. Immediately after the start of the engine 3, since the temperature of the catalyst 281 is low and lower than the activation temperature in most cases, the pause mode tends to be continued. In other words, the warm-up operation for increasing the temperature of the catalyst 281 is performed by the pause mode.

On the other hand, when the detected temperature Td of the temperature sensor S3 becomes equal to or more than the threshold temperature Tth ("YES" in Step S102), the engine 3 starts the normal mode (Step S104). Then, the engine 3 continues the normal mode until the engine 3 stops ("YES" in Step S105). Therefore, during traveling of the motorcycle 1, the engine 3 performs the normal mode.

As described above, in the present embodiment, performed are the normal mode for causing the four cylinders 31a to 31d to sequentially perform the combustion strokes so that the combustion strokes can occur at the intervals P1, P2, and P3 and the pause mode for causing one pause target cylinder 31d among the four cylinders 31a to 31d to pause the combustion stroke while causing the other cylinders 31a to 31c to perform the combustion stroke. In the normal mode, particularly, the pause target cylinder 31d performs an explosion at the boundary between the intervals P2 and P3 that occur successively. On the other hand, in the pause mode, since the pause target cylinder 31d pauses the combustion stroke, the shortest interval P3 does not occur. As a result, in the pause mode, the amount of unburned gas to be generated is suppressed. Then, in the present embodiment, since the warm-up operation (Step S103) is performed by the pause mode, it is possible to suppress the amount of unburned gas to be emitted from the muffler 28 of the motorcycle 1 during execution of the warm-up operation.

Incidentally, when the engine 3 is in an idling state, the ECU 4 controls the degree of opening of the throttle valve 34 on the basis of the rotation speed of the engine 3 obtained from the crank angle sensor S39, to thereby keep the rotation speed of the engine 3 not lower than a predetermined speed. At that time, when the pause mode is performed, the amount of air sucked by the cylinders 31a to 31c other than the pause target cylinder 31d increases, as compared with, for example, the case where the control is performed to keep the rotation speed of the engine 3 not lower than the predetermined speed in the normal mode. As a result, the combustions in these cylinders 31a to 31c are improved and the amount of unburned gas to be generated is thereby suppressed.

It can be assumed that there is a case where the driver starts traveling of the motorcycle 1 before the temperature of the catalyst 281 becomes equal to or more than the activation temperature. In such a case, the ECU 4 opens the throttle valve 34 in accordance with the operation of the driver while performing the pause mode during a period from the start of travelling until the temperature of the catalyst 281 becomes equal to or more than the activation temperature. As a result, since the amount of air sucked by the cylinders 31a to 31c other than the pause target cylinder 31d increases and the combustions in these cylinders 31a to 31c are improved as compared with the case where the normal mode is performed during this period, the amount of unburned gas to be generated is suppressed.

In the present embodiment, incidentally, one out of the two cylinders 31b and 31d both of which satisfy the pause target condition is determined as the pause target cylinder 31d in advance in the following manner. Specifically, as described above, in the engine 3, the period in which the intake valve 331 is opened and the period in which the exhaust valve 332 is opened partially overlap. For this reason, in this overlap period, there is a case where the expansion of the combustion chamber 310 due to the suction from the intake pipe 321 to the cylinder 31 causes backflow of the exhaust gas from the exhaust pipe 322 to the cylinder 31. When a pressure (atmospheric pressure) inside the exhaust pipe 322 pulsates and increases in this overlap period, in particular, the amount of exhaust gas flowing backward to the cylinder 31 increases and the combustion in this cylinder 31 is deteriorated. Therefore, out of the two cylinders 31b and 31d both satisfy the pause target condition, one cylinder 31 connected to the exhaust pipe in which the pressure is higher when the exhaust valve 332 is closed (in other words, during the above overlap period) has worse combustion in the normal mode.

Then, as the result of an experiment which is performed in advance to measure the pressure variation inside the exhaust pipe 322 in the vicinity of the exhaust port 312 while causing the engine 3 to perform the normal mode, it is determined that the one cylinder 31 (herein, the cylinder 31d) which is connected to the exhaust pipe 322 in which the pressure is higher during the above overlap period pauses in the pause mode. With this determination, in the pause mode, the combustion stroke in the cylinder 31d in which the combustion is relatively worse is paused. As a result, it is possible to more effectively suppress the amount of unburned gas to be emitted from the muffler 28 of the motorcycle 1 during execution of the warm-up operation in Step S103.

Also in the pause mode, same as in the normal mode, the intake valve 331 and the exhaust valve 332 perform a predetermined opening and closing operation for the pause target cylinder 31d. Therefore, also in the pause mode, the pause target cylinder 31d performs the intake stroke and the exhaust stroke. At that time, since the cylinder 31d does not perform the combustion stroke, the cylinder 31d does not generate, by itself, any energy to be used for driving the piston 37 for the intake stroke and the exhaust stroke and uses energy generated by the other cylinders 31a to 31c to perform the intake stroke and the exhaust stroke. Thus, the cylinder 31d performs a negative work accompanying the executions of the intake stroke and the exhaust stroke. Therefore, since respective workloads of the other cylinders 31a to 31c increase, the respective combustions in the other cylinders 31a to 31c are improved. As a result, it is possible to more effectively suppress the amount of unburned gas to be emitted from the muffler 28 of the motorcycle 1 during execution of the warm-up operation in Step S103.

Further, in the pause mode, the ECU 4 stops the supply of the fuel from the injector 35 provided for the pause target cylinder 31d, to thereby cause the pause target cylinder 31d to pause the combustion stroke. In other words, by simple control to stop the supply of the fuel from the injector 35, it becomes possible to cause the pause target cylinder 31d to pause the combustion stroke.

When the temperature of the catalyst 281 is lower than the activation temperature, the ECU 4 performs the warm-up operation by the pause mode. In other words, since the warm-up operation is performed when the temperature of the catalyst 281 is lower than the activation temperature, the catalyst 281 is heated by performing the warm-up operation and the catalyst 281 can be thereby activated. Moreover, since the warm-up operation is performed by the pause mode, it is possible to suppress the amount of unburned gas to be emitted during execution of the warm-up operation.

Further, the temperature sensor S3 is provided to detect the temperature of the engine 3, and the ECU 4 stores therein the threshold temperature Tth which corresponds to the detected temperature of the temperature sensor S3 in the case where the temperature of the catalyst 281 is not lower than the activation temperature. Then, when the temperature sensor S3 detects the temperature not lower than the threshold temperature Tth, the ECU 4 starts the normal mode. In this configuration, after the catalyst 281 is activated, the normal mode is started. For this reason, the unburned gas generated from the cylinder 31 during the normal mode can be reliably purified with the catalyst 281 and then emitted from the muffler 28 of the motorcycle 1.

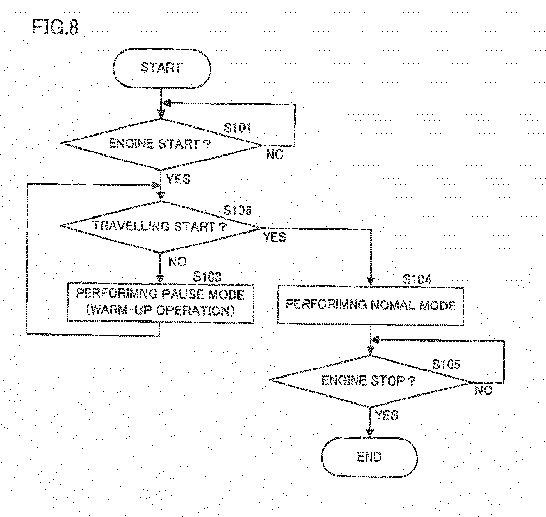

Fig. 8 is a flowchart showing a second exemplary control of the engine. Description will be made below, centering on the difference from the above-described embodiment, and common parts are represented by the corresponding reference signs and description thereof will be omitted as appropriate. It goes without saying, however, that providing the same constituent elements as those in the above-described embodiment produces the same effects.

The flow of the second exemplary control is the same as that of the first exemplary control except that Step S106 is executed instead of Step S102 in the first exemplary control. Specifically, in the second exemplary control, when it is confirmed that the engine 3 starts ("YES" in Step S101), it is determined whether or not the motorcycle 1 starts traveling (Step S106). Then, when the motorcycle 1 does not start traveling and stops ("NO" in Step S106), the engine 3 performs the pause mode (Step S103). Then, until the motorcycle 1 starts traveling (until "YES" in Step S106), the loop of Steps S106 and S103 is repeated and the engine 3 continues the pause mode. By performing the pause mode in Step S103, the warm-up operation for heating the catalyst 281 whose temperature is lower than the activation temperature immediately after the start of the engine 3 can be performed. On the other hand, when the motorcycle 1 starts traveling ("YES" in Step S106), the engine 3 starts the normal mode (Step S104). Then, the engine 3 performs the normal mode until the engine 3 stops ("YES" in Step S105).

Thus, the ECU 4 starts the warm-up operation during stopping of the motorcycle 1 (Step S103), and when the motorcycle 1 starts traveling, the ECU 4 starts the normal mode. Also in such a configuration, since the warm-up operation is performed by the pause mode in Step S103, it is possible to suppress the amount of unburned gas to be emitted from the muffler 28 of the motorcycle 1 during execution of the warm-up operation.

As described above, in the present embodiment, the motorcycle 1 corresponds to an exemplary "vehicle" of the present invention. The engine 3 corresponds to an exemplary "engine" of the present invention. The cylinder 31 corresponds to an exemplary "cylinder" of the present invention. The pause target cylinder 31d corresponds to an exemplary "one cylinder" of the present invention. The crankshaft 39 corresponds to an exemplary "crankshaft" of the present invention. The interval P1 corresponds to an exemplary "first interval" of the present invention, the interval P2 corresponds to an exemplary "second interval" of the present invention, and the interval P3 corresponds to an exemplary "third interval" of the present invention. The rotation angle (270 degrees) of the crankshaft 39 during the interval P1 corresponds to an exemplary "first angle" of the present invention. The rotation angle (180 degrees) of the crankshaft 39 during the interval P2 corresponds to an exemplary "second angle" of the present invention. The rotation angle (90 degrees) of the crankshaft 39 during the interval P3 corresponds to an exemplary "third angle" of the present invention. The catalyst 281 corresponds to an exemplary "catalyst" of the present invention. The ECU 4 corresponds to an exemplary "controller" and an exemplary "storage part" of the present invention. Step S103 corresponds to an exemplary "pause mode" of the present invention, and Step S104 corresponds to an exemplary "normal mode" of the present invention. The intake valve 331 corresponds to an exemplary "intake valve" of the present invention, and the exhaust valve 332 corresponds to an exemplary "exhaust valve" of the present invention. The injector 35 corresponds to an exemplary "fuel supply part" of the present invention. The temperature sensor S3 corresponds to an exemplary "temperature sensor" of the present invention. The threshold temperature Tth corresponds to an exemplary "threshold value" of the present invention.

In the above-described embodiment, for example, among the two cylinders 31b and 31d both of which satisfy the pause target condition, the cylinder 31d pauses the combustion stroke in the pause mode. The combustion stroke of the cylinder 31b, however, may be paused in the pause mode. Also in the pause mode of this variation, the shortest interval P3 does not occur. Specifically, the respective combustion strokes of the cylinders 31a, 31c, and 31d are sequentially performed so that the explosion interval can occur in the order of the interval P1 (first interval), an interval P23 (= P2 + P3 = P1), and the interval P2 (second interval). As a result, in the pause mode, the amount of unburned gas to be generated is suppressed. Then, by performing the warm-up operation (Step S103) by the pause mode, it is possible to suppress the amount of unburned gas to be emitted from the muffler 28 of the motorcycle 1 during execution of the warm-up operation.

Further, the determination criterion which is used to determine which of the pause mode and the normal mode should be performed is not limited to the above-described exemplary controls. Therefore, there may be a case, for example, where when the determination criterion is satisfied ("YES") in any one of Steps S102 and S106, the normal mode is performed, and when the determination criterion is not satisfied ("NO") in neither Step S102 nor Step S106, the pause mode is performed.

In the flowchart of Fig. 7, the timing at which the normal mode is started in Step S104 may not necessarily be immediately after the temperature Td of the engine 3 not lower than the threshold temperature Tth is detected. Therefore, the normal mode may be started in Step S104 after a predetermined time elapses since the temperature Td of the engine 3 not lower than the threshold temperature Tth is detected.

In the flowchart of Fig. 8, the timing at which the normal mode is started in Step S104 may not necessarily be immediately after it is confirmed that the motorcycle 1 starts traveling. Therefore, the normal mode may be started in Step S104 after a predetermined time elapses since it is confirmed that the motorcycle 1 starts traveling.

Further, the combustion stroke of the cylinder 31 is paused by stopping the fuel injection from the injector 35. The combustion stroke of the cylinder 31 can be paused, however, by closing the intake port 311 of the cylinder 31 throughout the period of the four strokes.

Though the above description has been made, taking the in-line four-cylinder engine 3 as an example, the arrangement manner of the cylinders 31 in the engine 3 is not limited to the in-line type but may be a V type as disclosed in, for example, JP 2014-211156. The number of cylinders 31 included in the engine 3 is not also limited to "4".

In a case, for example, where the number of cylinders 31 is more than "4", the intervals of the combustion strokes that the engine 3 causes the cylinders 31 to perform are not limited to the three patterns, i.e., the intervals P1, P2, and P3, but can be four or more interval patterns. Specifically, there may be a case where the engine 3 causes the cylinders 31 to perform the combustion stroke at a plurality of (four or more) intervals including the intervals P1, P2, and P3. In such a case, the shortest interval among all the plurality of intervals may be regarded like the above interval P3 and the pause target cylinder 31 may be determined in accordance with the pause target condition. Also in this variation, the interval P3 corresponds to an exemplary "third interval" of the present invention.

Further, the second shortest interval next to the interval P3 among all the plurality of intervals may be regarded like the above interval P2 and the pause target cylinder 31 may be determined in accordance with the pause target condition. Also in this variation, the interval P2 corresponds to an exemplary "second interval" of the present invention.

Though the above description has been made, taking the motorcycle 1 as an example, the same control can be also performed on an engine of a vehicle other than the motorcycle 1, for example, a motor four-wheeled vehicle.

Thus, as described above taking the specific embodiment as example, the present invention can have, for example, the following configuration.

Specifically, the intervals of the combustion strokes that the engine causes the cylinders to perform are not limited to the three patterns, i.e., the first interval, the second interval, and the third interval, but can be more than three patterns. Therefore, the vehicle may be configured so that the engine causes the cylinders to perform the combustion stroke at a plurality of intervals including the first interval, the second interval, and the third interval, respectively, and the third interval is a shortest interval among all of the plurality of intervals.

The vehicle may be configured so that the second interval is a second shortest interval next to the third interval among all of the plurality of intervals.

The vehicle may be configured so that four explosions are included in the normal mode, where a first explosion and a second explosion out of the four explosions are performed at the second interval, the second explosion and a third explosion out of the four explosions are performed at the third interval, and the third explosion and a fourth explosion out of the four explosions are performed at the second interval, and one of the second explosion and the third explosion is performed by the one cylinder. In such a configuration, since the third interval which is the shortest does not occur in the pause mode, the amount of unburned gas to be generated is suppressed. Then, since the warm-up operation is performed by the pause mode, it is possible to suppress the amount of unburned gas to be emitted from the vehicle during execution of the warm-up operation.

The vehicle may be configured so that the engine has an intake pipe and an exhaust pipe connected to the cylinder for each of the plurality of cylinders, in each of the cylinders, a period in which an intake valve which opens and closes the cylinder to the intake pipe is opened and another period in which an exhaust valve which opens and closes the cylinder to the exhaust pipe is opened partially overlap, and the one cylinder is a cylinder connected to the exhaust pipe which has a higher pressure therein when the exhaust valve is closed in the normal mode out of the cylinder performing the second explosion and the cylinder performing the third explosion, and pauses the combustion stroke in the pause mode.

In such a configuration, the period in which the intake valve which opens and closes the cylinder to the intake pipe is opened and the period in which the exhaust valve which opens and closes the cylinder to the exhaust pipe is opened partially overlap. For this reason, in this overlap period, there is a case where gas flows backward from the exhaust pipe to the cylinder when suction is performed from the intake pipe to the cylinder. When the pressure inside the exhaust pipe pulsates and increases in this overlap period, in particular, the amount of gas flowing backward to the cylinder increases and the combustion in this cylinder is deteriorated. Therefore, out of the cylinder performing the second explosion and the cylinder performing the third explosion, one cylinder connected to the exhaust pipe in which the pressure is higher when the exhaust valve is closed has worse combustion in the normal mode. On the other hand, in the pause mode, the combustion stroke in the cylinder in which the combustion is worse is paused. As a result, it is possible to more effectively suppress the amount of unburned gas to be emitted from the vehicle during execution of the warm-up operation.

Further, in the normal mode, the intake valve and the exhaust valve in each of the cylinders perform a predetermined opening and closing operation so that an intake stroke to suck gas by opening the intake valve and an exhaust stroke to emit gas by opening the exhaust valve are performed. Further, the vehicle may be configured so that the intake valve and the exhaust valve for the one cylinder perform the opening and closing operation in the pause mode so that the intake stroke and the exhaust stroke are performed. In such a configuration, in the pause mode, the one cylinder performs a negative work accompanying the executions of the intake stroke and the exhaust stroke. Therefore, since respective workloads of the other cylinders increase, the respective combustions in the other cylinders are improved. As a result, it is possible to more effectively suppress the amount of unburned gas to be emitted from the vehicle during execution of the warm-up operation.

The vehicle may be configured so that the engine has a fuel supply part configured to supply fuel to gas to be sucked by the cylinder for each of the cylinders, and the controller stops supply of the fuel from the fuel supply part provided for the one cylinder in the pause mode, to thereby cause the one cylinder to pause the combustion stroke. In such a configuration, by simple control to stop the supply of the fuel from the fuel supply part, it is possible to cause the one cylinder to pause the combustion stroke.

The vehicle may be configured so that the controller performs the warm-up operation in the pause mode when a temperature of the catalyst is lower than an activation temperature. In such a configuration, when the temperature of the catalyst is lower than the activation temperature, the warm-up operation is performed. For this reason, the catalyst is heated by performing the warm-up operation, and the catalyst can be thereby activated. Moreover, since the warm-up operation is performed by the pause mode, it is possible to suppress the amount of unburned gas to be emitted during execution of the warm-up operation.

The vehicle may further comprises: a temperature sensor configured to detect a temperature of the engine; and a storage part configured to store therein a threshold value which corresponds to a detection value of the temperature sensor in a case where the temperature of the catalyst is not lower than the activation temperature, wherein the controller starts the normal mode when the temperature sensor detects a temperature not lower than the threshold value. In such a configuration, after the catalyst is activated, the normal mode is started. For this reason, it is possible to emit the unburned gas generated from the cylinder during the normal mode, after being reliably purified with the catalyst.

The vehicle may be configured so that the controller starts the warm-up operation during stopping of the vehicle and starts the normal mode after the vehicle starts traveling. Also in such a configuration, since the warm-up operation is performed by the pause mode, it is possible to suppress the amount of unburned gas to be emitted from the vehicle during execution of the warm-up operation.

Although the invention has been described with reference to specific embodiments, this description is not meant to be construed in a limiting sense. Various modifications of the disclosed embodiment, as well as other embodiments of the present invention, will become apparent to persons skilled in the art upon reference to the description of the invention.

## Claims

1. A vehicle (1), comprising:
an engine (3) which has a plurality of cylinders (31a to 31d) and a crankshaft (39) connected to the plurality of cylinders (31a to 31d) and is configured to cause the cylinders (31a to 31d) to perform a combustion stroke at a first interval (P1) where the crankshaft (39) rotates through a first angle, at a second interval (P2) where the crankshaft (39) rotates through a second angle which is smaller than the first angle, and at a third interval (P3) where the crankshaft (39) rotates through a third angle which is smaller than the second angle, respectively;
a catalyst (281) configured to purify gas emitted from the plurality of cylinders (31a to 31d); and
a controller (4) configured to perform a normal mode (S104) which causes the plurality of cylinders (31a to 31d) to sequentially perform the combustion stroke so that the combustion stroke occurs at the first interval (P1), at the second interval (P2), and at the third interval (P3), and a pause mode (S103) which causes one cylinder (31d), which would perform an explosion at a boundary between the second interval (P2) and the third interval (P3) that are successive in the normal mode (S104) out of the plurality of cylinders (31a to 31d), to pause the combustion stroke while causing the other cylinders (31a to 31c) to perform the combustion stroke,
wherein before the normal mode (S104), the controller (4) performs a warm-up operation to increase a temperature of the catalyst (281) by the pause mode (S103).

2. The vehicle (1) according to claim 1, wherein
the engine (3) that is configured to cause the cylinders (31a to 31d) to perform the combustion stroke at a plurality of intervals including the first interval (P1), the second interval (P2), and the third interval (P3), respectively, and
the third interval (P3) is a shortest interval among all of the plurality of intervals.

3. The vehicle (1) according to claim 2, wherein
the second interval (P2) is a second shortest interval next to the third interval (P3) among all of the plurality of intervals.

4. The vehicle (1) according to any one of claims 1 to 3, wherein
four explosions are included in the normal mode (S104), where a first explosion and a second explosion out of the four explosions are performed at the second interval (P2), the second explosion and a third explosion out of the four explosions are performed at the third interval (P3), and the third explosion and a fourth explosion out of the four explosions are performed at the second interval (P2), and one of the second explosion and the third explosion is performed by the one cylinder (31d).

5. The vehicle (1) according to claim 4, wherein
the engine (3) has intake pipes (321) and exhaust pipes (322) connected to each of the plurality of cylinders (31a to 31d) respectively,
in each of the cylinders (31a to 31d), a period in which intake valves (331) which open and close the cylinders to the intake pipes (321) is opened and another period in which exhaust valves (332) which open and close the cylinders to the exhaust pipes (322) is opened, are set partially to overlap, and
the one cylinder (31d) is a cylinder which is connected to the exhaust pipe (322) which has a higher pressure therein when the exhaust valve (332) is closed in the normal mode (S104) out of the cylinder performing the second explosion and the cylinder performing the third explosion, and pauses the combustion stroke in the pause mode (S103).

6. The vehicle (1) according to any one of claims 1 to 5, wherein
in the normal mode (S104), the intake valve (331) and the exhaust valve (332) in each of the cylinders (31a to 31d) perform a predetermined opening and closing operation so that an intake stroke to suck gas by opening the intake valve (331) and an exhaust stroke to emit gas by opening the exhaust valve (332) are performed, and
in the pause mode (S103), the intake valve (331) and the exhaust valve (332) for the one cylinder (31d) perform the opening and closing operation so that the intake stroke and the exhaust stroke are performed.

7. The vehicle (1) according to any one of claims 1 to 6, wherein
the engine (3) has a fuel supply part configured to supply fuel to gas to be sucked by each of the cylinders (31a to 31d), and
the controller (4) stops supply of the fuel from the fuel supply part provided for the one cylinder (31d) in the pause mode (S103), to thereby cause the one cylinder (31d) to pause the combustion stroke.

8. The vehicle (1) according to any one of claims 1 to 7, wherein
when a temperature of the catalyst (281) is lower than an activation temperature, the controller (4) performs the warm-up operation in the pause mode (S103).

9. The vehicle (1) according to claim 8, further comprising:
a temperature sensor (S3) configured to detect a temperature of the engine (3); and
a storage part configured to store therein a threshold value which corresponds to a detection value of the temperature sensor (S3) in a case where the temperature of the catalyst (281) is not lower than the activation temperature,
wherein the controller (4) starts the normal mode (S104) when the temperature sensor (S3) detects a temperature not lower than the threshold value.

10. The vehicle (1) according to any one of claims 1 to 9, wherein
the controller (4) starts the warm-up operation during stopping of the vehicle (1) and starts the normal mode (S104) after the vehicle (1) starts traveling.

11. The vehicle (1) according to any one of claims 1 to 10, wherein
the engine (3) has four cylinders and the four cylinders are arranged in line.

12. A method of controlling an engine (3) which comprises a plurality of cylinders (31a to 31d) and a crankshaft (39) connected to the plurality of cylinders (31a to 31d) and emits gas to be purified with a catalyst (281), from the plurality of cylinders (31a to 31d), comprising:
performing a normal mode (S104) which causes the plurality of cylinders (31a to 31d) to sequentially perform a combustion stroke so that the combustion stroke occurs at a first interval (P1) where the crankshaft (39) rotates through a first angle, at a second interval (P2) where the crankshaft (39) rotates through a second angle smaller than the first angle, and at a third interval (P3) where the crankshaft (39) rotates through a third angle which is smaller than the second angle; and
performing a warm-up operation in a pause mode (S103) which causes one cylinder (31d), which would perform an explosion at a boundary between the second interval (P2) and the third interval (P3) that are successive in the normal mode (S104) out of the plurality of cylinders (31a to 31d), to pause a combustion stroke while causing the other cylinders (31a to 31 d) to perform the combustion stroke before performing the normal mode (S104).

## Patentansprüche

1. Fahrzeug (1), das umfasst:
einen Motor (3), der eine Vielzahl von Zylindern (31a bis 31d) und eine Kurbelwelle (39) hat, die mit der Vielzahl von Zylindern (31a bis 31d) verbunden und konfiguriert ist, um die Zylinder (31a bis 31d) einen Verbrennungshub in einem ersten Intervall (P1), in dem sich die Kurbelwelle (39) um einen ersten Winkel dreht, in einem zweiten Intervall (P2), in dem sich die Kurbelwelle (39) um einen zweiten Winkel dreht, der kleiner ist als der erste Winkel, und in einem dritten Intervall (P3) durchführen zu lassen, in dem sich die Kurbelwelle (39) um einen dritten Winkel dreht, der kleiner ist als der zweite Winkel;
einen Katalysator (281), der konfiguriert ist, um das von der Vielzahl von Zylindern (31a bis 31d) emittierte Gas zu reinigen; und
eine Steuerung (4), die konfiguriert ist, um einen Normalmodus (S104), der die Vielzahl von Zylindern (31a bis 31d) den Verbrennungshub nacheinander durchführen lässt, so dass der Verbrennungshub in dem ersten Intervall (P1), in dem zweiten Intervall (P2) und in dem dritten Intervall (P3) auftritt, und einen Pausenmodus (S103) durchzuführen, der einen Zylinder (31d) aus der Vielzahl von Zylindern (31a bis 31d), welcher eine Explosion an einer Grenze zwischen dem zweiten Intervall (P2) und dem dritten Intervall (P3) durchführen würde, die im Normalmodus (S104) aufeinanderfolgend sind, um den Verbrennungshub zu unterbrechen, während bewirkt wird, dass die anderen Zylinder (31a bis 31c) den Verbrennungshub durchführen,
wobei die Steuerung (4) vor dem Normalmodus (S104) einen Aufwärmvorgang durchführt, um eine Temperatur des Katalysators (281) durch den Pausenmodus (S103) zu erhöhen.

2. Fahrzeug (1) nach Anspruch 1, wobei
der Motor (3) konfiguriert ist, um die Zylinder (31a bis 31d) den Verbrennungshub bei einer Vielzahl von Intervallen einschließlich des ersten Intervalls (P1), des zweiten Intervalls (P2) bzw. des dritten Intervalls (P3) durchführen zu lassen, und
das dritte Intervall (P3) ein kürzestes Intervall unter allen aus der Vielzahl von Intervallen ist.

3. Fahrzeug (1) nach Anspruch 2, wobei
das zweite Intervall (P2) ein zweites kürzestes Intervall neben dem dritten Intervall (P3) unter allen aus der Vielzahl von Intervallen ist.

4. Fahrzeug (1) nach einem der Ansprüche 1 bis 3, wobei
vier Explosionen (S104) im Normalmodus enthalten sind, wobei eine erste Explosion und eine zweite Explosion aus den vier Explosionen im zweiten Intervall (P2) durchgeführt werden, die zweite Explosion und eine dritte Explosion aus den vier Explosionen im dritten Intervall (P3) durchgeführt werden und die dritte Explosion und eine vierte Explosion aus den vier Explosionen im zweiten Intervall (P2) durchgeführt werden, und die zweite Explosion oder die dritte Explosion durch den einen Zylinder (31d) durchgeführt wird.

5. Fahrzeug (1) nach Anspruch 4, wobei
der Motor (3) Ansaugrohre (321) und Abgasrohre (322) hat, die jeweils mit jedem aus der Vielzahl von Zylindern (31a bis 31d) verbunden sind,
in jedem der Zylinder (31a bis 31d) ein Zeitraum, in dem die die Zylinder zu den Ansaugrohren (321) öffnenden und schließenden Ansaugventile (331) geöffnet sind, und ein weiterer Zeitraum, in dem die die Zylinder zu den Abgasrohren (322) öffnenden und schließenden Abgasventile (332) geöffnet sind, so eingestellt werden, dass sie sich teilweise überlappen, und
der eine Zylinder (31d) ein Zylinder ist, welcher mit dem Abgasrohr (322) verbunden ist, das einen höheren Druck darin hat, wenn das Abgasventil (332) im Normalmodus (S104) aus dem Zylinder, der die zweite Explosion durchführt, und dem Zylinder, der die dritte Explosion durchführt, geschlossen wird, und im Pausenmodus (S103) den Verbrennungshub unterbricht.

6. Fahrzeug (1) nach einem der Ansprüche 1 bis 5, wobei
im Normalmodus (S104) das Ansaugventil (331) und das Abgasventil (332) in jedem der Zylinder (31a bis 31d) einen vorgegebenen Öffnungs- und Schließvorgang durchführen, so dass ein Ansaughub, um Gas durch Öffnen des Ansaugventils (331) einzusaugen, und ein Auslasshub durchgeführt werden, um Gas durch Öffnen des Abgasventils (332) zu emittieren, und
im Pausenmodus (S103) das Ansaugventil (331) und das Abgasventil (332) für den einen Zylinder (31d) den Öffnungs- und Schließvorgang so durchführen, dass der Ansaughub und der Auslasshub durchgeführt werden.

7. Fahrzeug (1) nach einem der Ansprüche 1 bis 6, wobei
der Motor (3) ein Kraftstoffzuführungsteil hat, das konfiguriert ist, um Kraftstoff in das Gas zuzuführen, das von jedem der Zylinder (31a bis 31d) eingesaugt werden soll, und
die Steuerung (4) die Zufuhr von Kraftstoff aus dem für den einen Zylinder (31d) bereitgestellten Kraftstoffzuführungsteil im Pausenmodus (S103) anhält, um dadurch den einen Zylinder (31d) den Verbrennungshub unterbrechen zu lassen.

8. Fahrzeug (1) nach einem der Ansprüche 1 bis 7, wobei,
wenn eine Temperatur des Katalysators (281) niedriger ist als eine Aktivierungstemperatur, die Steuerung (4) den Aufwärmvorgang im Pausenmodus (S103) durchführt.

9. Fahrzeug (1) nach Anspruch 8, das des Weiteren umfasst:
einen Temperatursensor (S3), der konfiguriert ist, um eine Temperatur des Motors (3) zu erfassen; und
ein Speicherteil, das konfiguriert ist, um darin einen Schwellenwert zu speichern, der einem Erfassungswert des Temperatursensors (S3) in einem Fall entspricht, bei dem die Temperatur des Katalysators (281) nicht niedriger ist als die Aktivierungstemperatur,
wobei die Steuerung (4) den Normalmodus (S104) startet, wenn der Temperatursensor (S3) eine Temperatur erfasst, die nicht niedriger ist als der Schwellenwert.

10. Fahrzeug (1) nach einem der Ansprüche 1 bis 9, wobei
die Steuerung (4) den Aufwärmvorgang während des Anhaltens des Fahrzeugs (1) beginnt und den Normalmodus (S104) startet, nachdem das Fahrzeug (1) die Fahrt begonnen hat.

11. Fahrzeug (1) nach einem der Ansprüche 1 bis 10, wobei der Motor (3) vier Zylinder hat und die vier Zylinder in Reihe angeordnet sind.

12. Verfahren zum Steuern eines Motors (3), der eine Vielzahl von Zylindern (31a bis 31d) und eine Kurbelwelle (39) umfasst, die mit der Vielzahl von Zylindern (31a bis 31d) verbunden ist und Gas aus der Vielzahl von Zylindern (31a bis 31d) emittiert, das mit einem Katalysator (281) zu reinigen ist, das umfasst:
Durchführen eines Normalmodus (S104), der die Vielzahl von Zylindern (31a bis 31d) nacheinander einen Verbrennungshub durchführen lässt, so dass der Verbrennungshub in einem ersten Intervall (P1), in dem sich die Kurbelwelle (39) um einen ersten Winkel dreht, in einem zweiten Intervall (P2), in dem sich die Kurbelwelle (39) um einen zweiten Winkel dreht, der kleiner ist als der erste Winkel, und in einem dritten Intervall (P3) auftritt, in dem sich die Kurbelwelle (39) um einen dritten Winkel dreht, der kleiner ist als der zweite Winkel; und
Durchführen eines Aufwärmvorgangs in einem Pausenmodus (S103), der einen Zylinder (31d) aus der Vielzahl von Zylindern (31a bis 31d), der eine Explosion an einer Grenze zwischen dem zweiten Intervall (P2) und dem dritten Intervall (P3) durchführen würde, die im Normalmodus (S104) aufeinanderfolgend sind, einen Verbrennungshub unterbrechen lässt, während bewirkt wird, dass die anderen Zylinder (31a bis 31d) den Verbrennungshub ausführen, bevor sie den Normalmodus (S104) durchführen.

## Revendications

1. Véhicule (1), comprenant :
un moteur (3) qui comporte une pluralité de cylindres (31a à 31d) et un arbre de vilebrequin (39) connecté à la pluralité de cylindres (31a à 31d) et qui est configuré pour amener les cylindres (31a à 31d) à effectuer une course de combustion à un premier intervalle (P1) où l'arbre de vilebrequin (39) tourne selon un premier angle, à un deuxième intervalle (P2) où l'arbre de vilebrequin (39) tourne selon un deuxième angle qui est inférieur au premier angle, et à un troisième intervalle (P3) où l'arbre de vilebrequin (39) tourne selon un troisième angle qui est inférieur au deuxième angle, respectivement ;
un catalyseur (281) configuré pour purifier les gaz émis par la pluralité de cylindres (31a à 31d) ;
et
une commande (4) configurée pour exécuter un mode normal (S104) qui amène la pluralité de cylindres (31a à 31 d) à réaliser séquentiellement la course de combustion de sorte que la course de combustion se produit au premier intervalle (P 1), au deuxième intervalle (P2) et au troisième intervalle (P3), et un mode pause (S103) qui amène un cylindre (31d), parmi la pluralité de cylindres (31a à 31d), qui réaliseraient une explosion à une limite entre le deuxième intervalle (P2) et le troisième intervalle (P3) se succédant dans le mode normal (S104), à interrompre la course de combustion tout en amenant les autres cylindres (31a à 31c) à effectuer la course de combustion,
où, avant le mode normal (S104), la commande (4) exécute une opération de préchauffage pour augmenter une température du catalyseur (281) lors du mode pause (S103).

2. Véhicule (1) selon la revendication 1, où
le moteur (3) - est configuré pour amener les cylindres (31a à 31 d) à effectuer la course de combustion à une pluralité d'intervalles comprenant le premier intervalle (P1), le deuxième intervalle (P2) et le troisième intervalle (P3), respectivement, et
le troisième intervalle (P3) est l'intervalle le plus court parmi toute la pluralité d'intervalles.

3. Véhicule (1) selon la revendication 2, où
le deuxième intervalle (P2) est un deuxième intervalle le plus court après le troisième intervalle (P3) parmi toute la pluralité d'intervalles.

4. Véhicule (1) selon l'une quelconque des revendications 1 à 3, où
quatre explosions sont incluses dans le mode normal (S104), où une première explosion et une deuxième explosion sur les quatre explosions sont effectuées lors du deuxième intervalle (P2), la deuxième explosion et une troisième explosion sur les quatre explosions sont effectuées lors du troisième intervalle (P3), et la troisième explosion et une quatrième explosion sur les quatre explosions sont effectuées lors du deuxième intervalle (P2), et l'une de la deuxième explosion et de la troisième explosion est effectuée par le cylindre (31d).

5. Véhicule (1) selon la revendication 4, où
le moteur (3) comporte des tuyaux d'admission (321) et des tuyaux d'échappement (322) reliés respectivement à chacun de la pluralité de cylindres (31a à 31d),
dans chacun des cylindres (31a à 31d), une période pendant laquelle des soupapes d'admission (331) qui ouvrent et ferment les cylindres aux tuyaux d'admission (321) est ouverte, et une autre période pendant laquelle les soupapes d'échappement (332) qui ouvrent et ferment les cylindres aux tuyaux d'échappement (322) est ouverte, sont réglées de manière à se chevaucher partiellement, et
le cylindre (31d) est un cylindre, parmi le cylindre effectuant la deuxième explosion et le cylindre effectuant la troisième explosion, qui est raccordé au tuyau d'échappement (322) et à l'intérieur duquel règne une pression plus élevée lorsque la soupape d'échappement (332) est fermée en mode normal (S104), et qui interrompt la course de combustion en mode pause (S103).

6. Véhicule (1) selon l'une quelconque des revendications 1 à 5, où
en mode normal (S104), la soupape d'admission (331) et la soupape d'échappement (332) dans chacun des cylindres (31a à 31d) effectuent une opération d'ouverture et de fermeture prédéterminée de sorte qu'une course d'admission pour aspirer du gaz en ouvrant la soupape d'admission (331) et une course d'échappement pour émettre du gaz en ouvrant la soupape d'échappement (332) sont effectuées, et
en mode pause (S103), la soupape d'admission (331) et la soupape d'échappement (332) pour le cylindre (31d) effectuent les opérations d'ouverture et de fermeture de sorte que la course d'admission et la course d'échappement sont effectuées.

7. Véhicule (1) selon l'une quelconque des revendications 1 à 6, où
le moteur (3) comporte une partie d'alimentation en carburant configurée pour fournir du carburant au gaz devant être aspiré par chacun des cylindres (31a à 31d), et
la commande (4) arrête l'alimentation en carburant à partir de la partie d'alimentation en carburant prévue pour le cylindre (31d) en mode pause (S103), pour ainsi amener le cylindre (31d) à interrompre la course de combustion.

8. Véhicule (1) selon l'une quelconque des revendications 1 à 7, où
lorsque une température du catalyseur (281) est inférieure à une température d'activation, la commande (4) effectue l'opération de préchauffage en mode pause (S103).

9. Véhicule (1) selon la revendication 8, comprenant en outre :
un capteur de température (S3) configuré pour détecter une température du moteur (3) ; et
une partie de stockage configurée pour stocker une valeur seuil qui correspond à une valeur de détection du capteur de température (S3) dans le cas où la température du catalyseur (281) n'est pas inférieure à la température d'activation,
où la commande (4) démarre le mode normal (S 104) lorsque le capteur de température (S3) détecte une température non inférieure à la valeur seuil.

10. Véhicule (1) selon l'une quelconque des revendications 1 à 9, où
la commande (4) démarre l'opération de préchauffage pendant l'arrêt du véhicule (1) et démarre le mode normal (S104) après que le véhicule (1) commence à rouler.

11. Véhicule (1) selon l'une quelconque des revendications 1 à 10, où le moteur (3) comporte quatre cylindres et les quatre cylindres sont disposés de manière alignée.

12. Procédé de commande d'un moteur (3) qui comprend une pluralité de cylindres (31a à 31d) et un arbre de vilebrequin (39) connecté à la pluralité de cylindres (31a à 31d) et émet un gaz à purifier avec un catalyseur (281), hors de la pluralité de cylindres (31a à 31d) comprenant :
l'exécution d'un mode normal (S104) qui amène la pluralité de cylindres (31a à 31d) à effectuer séquentiellement une course de combustion de sorte que la course de combustion se produit à un premier intervalle (P 1) où l'arbre de vilebrequin (39) tourne selon un premier angle, à un deuxième intervalle (P2) où l'arbre de vilebrequin (39) tourne selon un deuxième angle inférieur au premier angle et à un troisième intervalle (P3) où l'arbre vilebrequin (39) tourne selon un troisième angle qui est inférieur au deuxième angle ; et
l'exécution d'une opération de préchauffage en mode pause (S103) qui amène un cylindre (31d), parmi la pluralité de cylindres (31a à 31d), qui réaliserait une explosion à une limite entre le deuxième intervalle (P2) et le troisième intervalle (P3) se succédant dans le mode normal (S104), à interrompre la course de combustion tout en amenant les autres cylindres (31a à 31c) à effectuer la course de combustion avant d'exécuter le mode normal (S104)
